(19) Europäisches Patentamt
European Patent Office
Office européen des brevets

(11) EP 4 475 226 A2

(12) **EUROPEAN PATENT APPLICATION**

(43) Date of publication:
**11.12.2024 Bulletin 2024/50**

(21) Application number: **24179490.8**

(22) Date of filing: **03.06.2024**

(51) International Patent Classification (IPC):
***H01M 4/505*** *(2010.01)* ***H01M 10/04*** *(2006.01)*
***H01M 10/0525*** *(2010.01)* ***H01M 10/0567*** *(2010.01)*
***H01M 10/0569*** *(2010.01)*

(52) Cooperative Patent Classification (CPC):
**H01M 10/0567; H01M 4/505; H01M 10/04; H01M 10/0525; H01M 10/0569**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **05.06.2023 KR 20230072446**

(71) Applicant: **Samsung SDI Co., Ltd.**
**Yongin-si, Gyeonggi-do 17084 (KR)**

(72) Inventors:
- **Park, Hongryeol**
  **17084 Yongin-si, Gyeonggi-do (KR)**
- **Choi, Hyunbong**
  **17084 Yongin-si, Gyeonggi-do (KR)**
- **Park, Injun**
  **17084 Yongin-si, Gyeonggi-do (KR)**
- **Park, Sangwoo**
  **17084 Yongin-si, Gyeonggi-do (KR)**
- **Sohee, Kim**
  **17084 Yongin-si, Gyeonggi-do (KR)**
- **Yang, Yeji**
  **17084 Yongin-si, Gyeonggi-do (KR)**
- **Kim, Sanghoon**
  **17084 Yongin-si, Gyeonggi-do (KR)**

(74) Representative: **Gulde & Partner**
**Patent- und Rechtsanwaltskanzlei mbB**
**Wallstraße 58/59**
**10179 Berlin (DE)**

(54) **RECHARGEABLE LITHIUM BATTERY**

(57) A rechargeable lithium battery including a positive electrode including a cobalt-free positive electrode active material with a layered structure, a negative electrode, and an electrolyte is provided.

EP 4 475 226 A2

## Description

## BACKGROUND

### 1. Field

According to one or more embodiments, the present disclosure relates to a rechargeable lithium battery.

### 2. Description of the Related Art

A rechargeable lithium battery may be recharged and has three or more times as high energy density per unit weight as a comparable lead storage battery, nickelcadmium battery, nickel hydrogen battery, nickel zinc battery and/or the like. It may be also charged at a relatively high rate and thus, is commercially manufactured for a laptop, a cell phone, an electric tool, an electric bike, and/or the like, and researches on improvement of additional energy density have been actively made or pursued.

This rechargeable lithium battery is utilized by injecting an electrolyte into an electrode assembly that includes a positive electrode (e.g., including a positive electrode active material) and a negative electrode (e.g., including a negative electrode active material).

One of the recent developmental advances in technology for a rechargeable lithium battery is to improve (or provide suitable) high-temperature charge/discharge and storage characteristics and, also, improve (or provide suitable) room-temperature charge/discharge characteristics. In general, rechargeable lithium batteries may experience an increase in electrical resistance and/or a decrease in cycle-life after being repeatedly charged and discharged at room temperature. These undesirable changes may become more severe if utilizing a cobalt-free positive electrode active material and/or storing the rechargeable lithium battery at relatively high temperatures.

## SUMMARY

The invention is defined by the appended claims. The description that follows is subjected to this limitation. Any disclosure lying outside the scope of said claims is only intended for illustrative as well as comparative purposes. One or more aspects are directed toward a rechargeable lithium battery in which an increase in resistance is suppressed or reduced at room temperature and/or high temperature and cycle-life characteristics are improved while utilizing a cobalt-free positive electrode active material.

Additional aspects will be set forth in part in the description which follows and, in part, will be apparent from the description, or may be learned by practice of the presented embodiments of the disclosure.

According to one or more embodiments a rechargeable lithium battery includes a positive electrode including a cobalt-free positive electrode active material with a layered structure; a negative electrode; and an electrolyte including an additive represented by Chemical Formula 1:

Chemical Formula 1

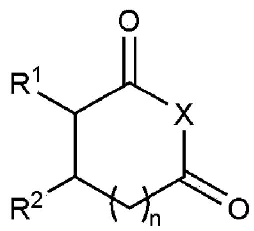

in Chemical Formula 1,

X is O or S;
$R^1$ and $R^2$ are each independently a hydrogen atom, a substituted or unsubstituted C1 to C10 alkyl group, or are linked to each other to form (or provide) a C3 to C10 aliphatic ring; and
n is an integer from 0 to 3.

In the rechargeable lithium battery according to some embodiments, by utilizing a cobalt-free positive electrode active material and utilizing an aliphatic cyclic acid anhydride-based compound as an electrolyte additive, an increase in resistance at room temperature and/or high temperature may be suppressed or reduced and cycle-life characteristics

may be improved.

## BRIEF DESCRIPTION OF THE DRAWINGS

FIGs. 1-3 are schematic views showing rechargeable lithium batteries according to some embodiments.

## DETAILED DESCRIPTION

Hereinafter, a rechargeable lithium battery according to some embodiments will be described in more detail with reference to the attached drawings, so that those of ordinary skill in the art can easily implement them. Examples of which are illustrated in the accompanying drawings, wherein like reference numerals refer to like elements throughout, and duplicative descriptions thereof may not be provided. Accordingly, the embodiments are described, by referring to the drawings, to explain aspects of the present description.

The terminology utilized herein is utilized to describe embodiments only, and is not intended to limit the present disclosure. The singular expressions "a," "an," and "the" include the plural expressions, including "at least one," unless the context clearly dictates otherwise.

As utilized herein, "combination thereof" refers to a mixture, laminate, composite, copolymer, alloy, blend, reaction product, and/or the like of the constituents.

Herein, it should be understood that terms such as "comprises," "comprise," "comprising," "includes," "including," "include," "having," "has," and/or "have" are intended to designate the presence of an embodied aspect, number, operation, element, and/or a (e.g., any suitable) combination thereof, but it does not preclude the possibility of the presence or addition of one or more other feature, number, operation, element, and/or a (e.g., any suitable) combination thereof.

In the drawings, the thickness of layers, films, panels, regions, and/or the like, are exaggerated for clarity wherein like reference numerals designate like elements, and duplicative descriptions thereof may not be provided throughout the specification. It will be understood that if an element such as a layer, film, region, or substrate is referred to as being "on" another element, it can be directly on the other element or intervening elements may also be present. In contrast, if an element is referred to as being "directly on" another element, there are no intervening elements present.

In one or more embodiments, the term "layer" herein includes not only a shape formed on the whole surface if viewed from a plan view, but also a shape formed on a partial surface.

It will be understood that, although the terms "first," "second," "third," and/or the like may be utilized herein to describe one or more suitable elements, components, regions, layers and/or sections, these elements, components, regions, layers and/or sections should not be limited by these terms. These terms are only utilized to distinguish one element, component, region, layer or section from another element, component, region, layer, or section. Thus, a first element, component, region, layer, or section described herein may be termed a second element, component, region, layer or section without departing from the teachings set forth herein.

As utilized herein, the term "and/or" includes any, and all, combinations of one or more of the associated listed items. Expressions such as "at least one of," "one of," and "selected from," if preceding a list of elements, modify the entire list of elements and do not modify the individual elements of the list. For example, the expressions "at least one of a to c," "at least one of a, b or c," and "at least one of a, b and/or c" may indicate only a, only b, only c, both (e.g., simultaneously) a and b, both (e.g., simultaneously) a and c, both (e.g., simultaneously) b and c, all of a, b, and c, or variations thereof.

Spatially relative terms, such as "beneath," "below," "lower," "above," "upper" and/or the like, may be utilized herein to easily describe the relationship between one element or feature and another element or feature. It will be understood that the spatially relative terms are intended to encompass different orientations of a device in utilization or operation in addition to the orientation illustrated in the drawings. For example, if the device in the drawings is turned over, elements described as "below" or "beneath" other elements or features will be oriented "above" the other elements or features. Thus, the example term "below" can encompass both (e.g., simultaneously) the orientations of above and below. The device may be otherwise oriented (rotated 90 degrees or at other orientations), and the spatially relative terms utilized herein may be interpreted accordingly.

The terminology utilized herein is utilized for the purpose of describing particular embodiments only, and is not intended to limit the present disclosure. Unless otherwise defined, all terms (including chemical, technical and scientific terms) utilized herein have the same meaning as commonly understood by one of ordinary skill in the art to which this disclosure pertains. It will be further understood that terms, such as those defined in commonly utilized dictionaries, should be interpreted as having a meaning that is consistent with their meaning in the context of the related art and the present disclosure, and will not be interpreted in an idealized or overly formal sense.

Example embodiments are described herein with reference to cross-sectional views, which are schematic views of idealized embodiments. As such, variations from the shapes of the illustrations as a result, for example, of manufacturing techniques and/or tolerances, are to be expected. Thus, embodiments described herein should not be construed as

being limited to the particular shapes of regions as illustrated herein but are to include deviations in shapes that result, for example, from manufacturing. For example, a region illustrated or described as flat may, typically, have rough and/or nonlinear features. Moreover, sharp angles that are illustrated may be rounded. Thus, the regions illustrated in the drawings are schematic in nature and their shapes are not intended to illustrate the precise shape of a region and are not intended to limit the scope of the present claims.

The term "may" will be understood to refer to "one or more embodiments of the present disclosure," some of which include the described element and some of which exclude that element and/or include an alternate element. Similarly, alternative language such as "or" refers to "one or more embodiments of the present disclosure," each including a corresponding listed item.

In this context, "consisting essentially of" means that any additional components will not materially affect the chemical, physical, optical or electrical properties of the semiconductor film.

Further, in this specification, the phrase "on a plane," or "plan view," means viewing a target portion from the top, and the phrase "on a cross-section" means viewing a cross-section formed by vertically cutting a target portion from the side.

## Definitions

The term "particle diameter" as utilized herein refers to an average diameter of particles if the particles are spherical, and refers to an average major axis length of particles if the particles are non-spherical. For example, the average particle diameter may be measured by a method well suitable to those skilled in the art, for example, may be measured by a particle size analyzer, or may be measured by a transmission electron microscopic image or a scanning electron microscopic image. It may be possible to obtain an average particle diameter value by measuring utilizing a dynamic light scattering method, performing data analysis, counting the number of particles for each particle size range, and calculating from this. Unless otherwise defined, the average particle diameter may refer to the diameter ($D_{50}$) of particles having a cumulative volume of 50 volume% in the particle size distribution. If measuring by laser diffraction, more specifically, the particles to be measured are dispersed in a dispersion medium and then introduced into a related art laser diffraction particle size measuring device (e.g., MT 3000 available from Microtrac, Ltd.) utilizing ultrasonic waves at about 28 kHz, and after irradiation with an output of 60 W, the average particle diameter (D50) based on 50% of the particle size distribution in the measuring device can be calculated. As utilized herein, if a definition is not otherwise provided, the average particle diameter refers to a diameter ($D_{50}$) of particles having a cumulative volume of 50 volume% in the particle size distribution that is obtained by measuring the size (diameter or length of the major axis) of about 20 particles at random in a scanning electron microscopic image.

In present disclosure, "not include a or any 'component'" "exclude a or any 'component'", "'component'-free", and/or the like refers to that the "component" not being added, selected or utilized as a component in the composition/structure, but the "component" of less than a suitable amount may still be included due to other impurities and/or external factors.

Herein, "or" is not to be construed as an exclusive meaning, for example, "A or B" is construed to include A, B, A+B, and/or the like.

"Metal" is interpreted as a concept including ordinary metals, transition metals and metalloids (semi-metals).

As utilized herein, "substituted" refers to replacement of at least one hydrogen of a compound by a substituent selected from among a halogen atom (F, Cl, Br, or I), a hydroxy group, a C1 to C20 alkoxy group, a nitro group, a cyano group, amine group, an imino group, an azido group, an amidino group, a hydrazino group, a hydrazono group, a carbonyl group, a carbamyl group, a thiol group, an ester group, an ether group, a carboxyl group or a salt thereof, a sulfonic acid group or a salt thereof, a phosphoric acid or a salt thereof, a C1 to C20 alkyl group, a C2 to C20 alkenyl group, a C2 to C20 alkynyl group, a C6 to C20 aryl group, a C3 to C20 cycloalkyl group, a C3 to C20 cycloalkenyl group, a C3 to C20 cycloalkynyl group, a C2 to C20 heterocycloalkyl group, a C2 to C20 heterocycloalkenyl group, a C2 to C20 heterocycloalkynyl group, a C3 to C20 heteroaryl group, and/or a (e.g., any suitable) combination thereof.

Herein, for example, C1 to C20 refers to having 1 to 20 carbon atoms.

## Rechargeable Lithium Battery

In some embodiments, a rechargeable lithium battery includes a positive electrode including a cobalt-free positive electrode active material having (e.g., with) a layered structure; a negative electrode; and an electrolyte including an additive represented by Chemical Formula 1:

Chemical Formula 1

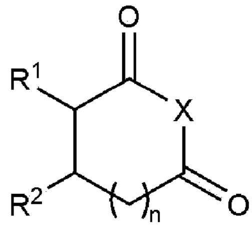

wherein, in Chemical Formula 1,

X is O or S;
$R^1$ and $R^2$ are each independently a hydrogen atom, a substituted or unsubstituted C1 to C10 alkyl group, or are linked to each other to form (or provide) a C3 to C10 aliphatic ring; and
n may be an integer from 0 to 3.

**Positive Electrode Active Material**

Recently, in response to cobalt depletion and rising costs, research on so-called "cobalt-free positive electrode active materials" is underway. The cobalt-free positive electrode active material refers to a positive electrode active material with a layered structure composed of nickel, manganese, and/or the like as main components and excludes (e.g., does not include or contain) cobalt (e.g., in the positive electrode active material composition). In some embodiments, a rechargeable lithium battery also utilizes a cobalt-free positive electrode active material.
The cobalt-free positive electrode active material may include at least one (e.g., at least one type or kind of) lithium composite oxide represented by Chemical Formula 2.

Chemical Formula 2 $Li_aNi_xMn_yM^1{}_zM^2{}_wO_{2\pm b}X_c$

In Chemical Formula 2,

$0.5 \le a < 1.8$, $0 \le b \le 0.1$, $0 \le c \le 0.1$, $0 \le w < 0.1$, $0.6 \le x < 1.0$, $0 < y < 0.4$, $0 < z < 0.1$, $w + x + y + z = 1$,
$M^1$ and $M^2$ may each independently be one or more elements selected from among Al, Mg, Ti, Zr, Cr, Sr, V, B, W, Mo, Nb, Si, Ba, Ca, Ce, Cr, Fe and Nb, and X may be one or more elements selected from among S, F, P, and Cl.
As an example, Chemical Formula 2 may be represented by Chemical Formula 2-1.

Chemical Formula 2-1 $Li_aNi_{x1}Mn_{y1}Al_{z1}M^2{}_{w1}O_{2\pm b}X_c$

In Chemical Formula 2-1,

$0.5 \le a < 1.8$, $0 \le b \le 0.1$, $0 \le c \le 0.1$, $0 \le w1 < 0.1$, $0.6 \le x1 < 1.0$, $0 < y1 < 0.4$, $0 < z1 < 0.1$, $w1 + x1 + y1 + z1 = 1$,
$M^2$ may be one or more elements selected from among Mg, Ti, Zr, Cr, Sr, V, B, W, Mo, Nb, Si, Ba, Ca, Ce, Cr, Fe and Nb, and X may be one or more elements selected from among S, F, P, and Cl.

In Chemical Formula 2-1, $0.7 \le x1 < 1.0$, $0 < y1 < 0.3$, $0 < z1 < 0.1$, or $0.8 \le x1 < 1.0$, $0 < y1 < 0.2$, $0 < z1 < 0.1$.
If the transition metal is eluted from the positive electrode active material and is reduced on the surface of the negative electrode during operation of a rechargeable lithium battery, the structure of the surface of the negative electrode may be weakened. As a result, increased battery resistance and reduced cycle-life may occur, and in the long term, lithium dendrites may be formed, that may cause a short circuit between the positive electrode and negative electrode.
The cobalt-free positive electrode active material may have relatively high structural instability due to the absence of cobalt, so there is a high probability that nickel and/or manganese will be eluted during operation of the rechargeable lithium battery. Additionally, this problem may become more severe at high temperatures.

**Additive**

In some embodiments, the additive may be an aliphatic cyclic anhydride-based compound represented by Chemical Formula 1.

The aliphatic cyclic acid anhydride-based compound (Chemical Formula 1) may be reduced and decomposed on the surface of the negative electrode during operation of a rechargeable lithium battery and thus forms a stable solid electrolyte interface (SEI) film. Accordingly, if an electrolyte prepared by adding the aliphatic cyclic acid anhydride-based compound (Chemical Formula 1) is utilized, even though the cobalt-free positive electrode active material having (e.g., with) a layered structure is utilized, the stable SEI film may improve cycle-life characteristics, as well as, protect the surface of the negative electrode and suppress or reduce an increase in resistance during operation of a rechargeable lithium battery at room temperature and/or a high temperature.

The description of Chemical Formula 1 representing the additive is as follows.

X may be O.

$R^1$ and $R^2$ may each independently be a hydrogen atom or a methyl group, or may be linked to each other to form (or provide) a cyclohexane ring.

n may be 0 or 1.

Representative examples of the additive represented by Chemical Formula 1 are as follows:

Chemical Formula 1-1

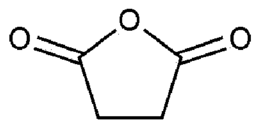

Chemical Formula 1-2

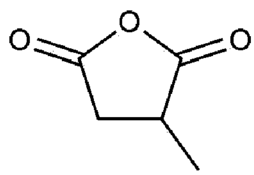

Chemical Formula 1-3

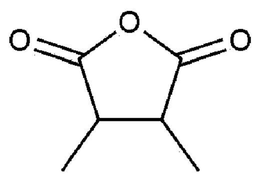

Chemical Formula 1-4

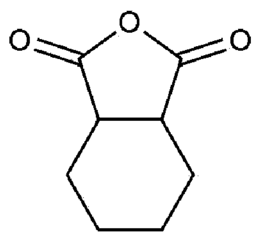

Chemical Formula 1-5

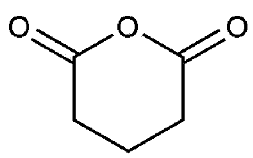

The additive may be included in an amount of about 0.05 to about 3 wt%, about 0.05 to about 2 wt%, or about 0.05 to about 1 wt%, based on 100 wt% of the electrolyte. Within these ranges, the aliphatic cyclic acid anhydride-based compound (Chemical Formula 1) may be reduced and decomposed on the surface of the negative electrode to form (or provide) a stable SEI film.

**Non-aqueous Organic Solvent**

The electrolyte may further include a non-aqueous organic solvent.

The non-aqueous organic solvent serves as a medium for transmitting ions taking part in the electrochemical reaction of a battery.

The non-aqueous organic solvent may be a carbonate-based, ester-based, ether-based, ketone-based, or alcohol-based solvent, an aprotic solvent, and/or a (e.g., any suitable) combination thereof.

The carbonate-based solvent may include dimethyl carbonate (DMC), diethyl carbonate (DEC), dipropyl carbonate (DPC), methylpropyl carbonate (MPC), ethylpropyl carbonate (EPC), methylethyl carbonate (MEC), ethylene carbonate (EC), propylene carbonate (PC), butylene carbonate (BC), and/or the like. The ester-based solvent may include methyl acetate, ethyl acetate, n-propyl acetate, dimethylacetate, methylpropionate, ethylpropionate, decanolide, mevalonolactone, valerolactone, caprolactone, and/or the like.

The ether-based solvent may include dibutyl ether, tetraglyme, diglyme, dimethoxyethane, 2-methyltetrahydrofuran, 2,5-dimethyltetrahydrofuran, tetrahydrofuran, and/or the like. The ketone-based solvent may include cyclohexanone and/or the like. The alcohol-based solvent may include ethyl alcohol, isopropyl alcohol, and/or the like, and the aprotic solvent may include nitriles such as R-CN (wherein R is a C2 to C20 linear, branched, or cyclic hydrocarbon group, a double bond, an aromatic ring, or an ether group), amides such as dimethylformamide, dioxolanes such as 1,3-dioxolane or 1,4-dioxolane, sulfolanes, and/or the like.

The non-aqueous organic solvent may be utilized alone or as a combination with two or more (e.g., of them), and if utilized in combination with two or more, a mixing ratio may be appropriately adjusted according to the desired or suitable battery performance, which is well understood by those skilled in the art.

Additionally, if utilizing a carbonate-based solvent, a cyclic carbonate, and a chain carbonate may be mixed and utilized. For example, the cyclic carbonate and the chain carbonate may be mixed at a volume ratio of about 1:1 to about 1:9.

The non-aqueous organic solvent may further include an aromatic hydrocarbon-based organic solvent. For example, a carbonate-based solvent and an aromatic hydrocarbon-based organic solvent may be mixed and utilized in a volume ratio of about 1:1 to about 30:1.

The electrolyte may further include vinylethyl carbonate, vinylene carbonate, or an ethylene carbonate-based compound, e.g., to improve battery cycle-life.

Representative examples of the ethylene carbonate-based compound may include fluoroethylene carbonate, difluoroethylene carbonate, chloroethylene carbonate, dichloroethylene carbonate, bromoethylene carbonate, dibromoethylene carbonate, nitroethylene carbonate, and cyanoethylene carbonate.

**Lithium Salt**

The electrolyte may further include lithium salt.

The lithium salt dissolved in the organic solvent supplies lithium ions in a battery, enables the general operation of a rechargeable lithium battery, and improves transportation of the lithium ions between positive and negative electrodes. Examples of the lithium salt may include at least one of (e.g., at least one selected from among) $LiPF_6$, $LiBF_4$, $LiSbF_6$, $LiAsF_6$, $LiClO_4$, $LiAlO_2$, $LiAlCl_4$, $LiPO_2F_2$, LiCl, LiI, $LiN(SO_3C_2F_5)_2$, $Li(FSO_2)_2N$ (lithium bis(fluorosulfonyl)imide, LiFSI), $LiC_4F_9SO_3$, $LiN(C_xF_{2x+1}SO_2)(C_yF_{2y+1}SO_2)$ (wherein x and y are integers of 1 to 20), lithium trifluoromethane sulfonate, lithium tetrafluoroethanesulfonate, lithium difluorobis(oxalato)phosphate (LiDFOB), and lithium bis(oxalato) borate (LiBOB).

A concentration of the lithium salt may be within the range of about 0.1 M to about 2.0 M. If the concentration of lithium salt is within the described range, the electrolyte may have an appropriate or suitable ionic conductivity and viscosity, and thus excellent or suitable performance may be achieved, e.g., the lithium ions may move effectively.

**Positive Electrode**

The positive electrode for a rechargeable lithium battery may include a current collector and a positive electrode active material layer on the current collector. The positive electrode active material layer may include a positive electrode active material and may further include a binder and/or a conductive material.

A content of the positive electrode active material may be about 90 wt% to about 99.5 wt% based on 100 wt%

of the positive electrode active material layer.

In some embodiments, the positive electrode active material layer may further include a binder and a conductive material. At this time, a content of the binder and the conductive material may be about 0.5 wt% to about 5 wt%, respectively, based on 100 wt% of the positive electrode active material layer.

The binder serves to attach the positive electrode active material particles well to each other and, also, to attach the positive electrode active material well to the current collector. Examples of the binder may include polyvinyl alcohol, carboxymethyl cellulose, hydroxypropyl cellulose, diacetyl cellulose, polyvinylchloride, carboxylated polyvinylchloride, polyvinylfluoride, a polymer including ethylene oxide, polyvinylpyrrolidone, polyurethane, polytetrafluoroethylene, polyvinylidene fluoride, polyethylene, polypropylene, a styrene-butadiene rubber, a (meth)acrylated styrene-butadiene rubber, an epoxy resin, a (meth)acrylic resin, a polyester resin, nylon, and/or the like, as non-limiting examples.

The conductive material may be utilized to impart conductivity (e.g., electrical conductivity) to the electrode. Any material that does not cause chemical change (e.g., does not cause an undesirable chemical change in the rechargeable lithium battery) and conducts electrons can be utilized in the battery. Examples of the conductive material may include a carbon-based material such as natural graphite, artificial graphite, carbon black, acetylene black, ketjen black, a carbon fiber, a carbon nanofiber, and carbon nanotube; a metal-based material containing copper, nickel, aluminum, silver, and/or the like, in a form of (to provide) a metal powder or a metal fiber; a conductive polymer such as a polyphenylene derivative; or a mixture thereof.

Al may be utilized as the current collector, but the present disclosure is not limited thereto.

## Negative Electrode Active Material

The negative electrode active material may be a material that reversibly intercalates/deintercalates lithium ions, a lithium metal, a lithium metal alloy, a material capable of doping and dedoping lithium, or a transition metal oxide.

The material that reversibly intercalates/deintercalates lithium ions may include a carbon-based negative electrode active material, for example crystalline carbon, amorphous carbon, and/or a (e.g., any suitable) combination thereof. The crystalline carbon may be graphite such as non-shaped, sheet-shaped, flake-shaped, sphere-shaped, or fiber-shaped natural graphite or artificial graphite. The amorphous carbon may be a soft carbon, a hard carbon, a mesophase pitch carbonization product, calcined coke, and/or the like.

The lithium metal alloy may include lithium and a metal selected from among Na, K, Rb, Cs, Fr, Be, Mg, Ca, Sr, Si, Sb, Pb, In, Zn, Ba, Ra, Ge, Al, and Sn.

The material capable of doping/dedoping lithium may be a Si-based negative electrode active material or a Sn-based negative electrode active material. The Si-based negative electrode active material may include silicon, a silicon-carbon composite, $SiO_x$ ($0 < x \leq 2$), a Si-Q alloy (where Q is selected from among an alkali metal, an alkaline-earth metal, a Group 13 element, a Group 14 element (excluding Si), a Group 15 element, a Group 16 element, a transition metal, a rare earth element, and/or a (e.g., any suitable) combination thereof, for example Mg, Ca, Sr, Ba, Ra, Sc, Y, Ti, Zr, Hf, Rf, V, Nb, Ta, Db, Cr, Mo, W, Sg, Tc, Re, Bh, Fe, Pb, Ru, Os, Hs, Rh, Ir, Pd, Pt, Cu, Ag, Au, Zn, Cd, B, Al, Ga, Sn, In, Tl, Ge, P, As, Sb, Bi, S, Se, Te, Po, and/or a (e.g., any suitable) combination thereof). The Sn-based negative electrode active material may include Sn, $SnO_2$, $SnO_x$ ($0 < x < 2$), a Sn-based alloy, and/or a (e.g., any suitable) combination thereof.

The silicon-carbon composite may be a composite of silicon and amorphous carbon. An average particle diameter ($D_{50}$) of the silicon-carbon composite particle may be for example about 0.5 micrometer ($\mu$m) to about 20 $\mu$m. According to some embodiments, the silicon-carbon composite may be in a form of (or provide) silicon particles and amorphous carbon coated on the surface of the silicon particles. For example, the silicon-carbon composite may include a secondary particle (core) in which primary silicon particles are assembled, and an amorphous carbon coating layer (shell) on the surface of the secondary particle. The amorphous carbon may also be between the primary silicon particles, and, for example, the primary silicon particles may be coated with the amorphous carbon. The secondary particle may be (exist) dispersed in an amorphous carbon matrix.

The silicon-carbon composite may further include crystalline carbon. For example, the silicon-carbon composite may include a core including crystalline carbon and silicon particles and an amorphous carbon coating layer on a surface of the core. The crystalline carbon may be artificial graphite, natural graphite, and/or a (e.g., any suitable) combination thereof. The amorphous carbon may include soft carbon or hard carbon, a mesophase pitch carbonized product, and calcined coke.

If the silicon-carbon composite includes silicon and amorphous carbon, a content of silicon may be about 10 wt% to about 50 wt%, and a content of amorphous carbon may be about 50 wt% to about 90 wt% based on 100 wt% of the silicon-carbon composite. In one or more embodiments, if the composite includes silicon, amorphous carbon, and crystalline carbon, a content of silicon may be about 10 wt% to about 50 wt%, and a content of crystalline carbon may be about 10 wt% to about 70 wt%, and a content of amorphous carbon may be about 20 wt% to about 40 wt% based on 100 wt% of the silicon-carbon composite.

Additionally, a thickness of the amorphous carbon coating layer may be about 5 nanometer (nm) to about 100 nm. An average particle diameter ($D_{50}$) of the silicon particles (primary particles) may be about 10 nm to about 1 $\mu$m, or about 10 nm to about 200 nm. The silicon particles may exist as silicon alone, in the form of (or provide) a silicon alloy, or in an oxidized form. The oxidized form of silicon may be represented by $SiO_x(0<x\leq2)$. At this time, an atomic content ratio of Si:O, which indicates a degree of oxidation, may be 99:1 to 33:67. As utilized herein, if a definition is not otherwise provided, an average particle diameter (D50) indicates a particle where an accumulated volume is about 50 volume% in a particle distribution.

The Si-based negative electrode active material or the Sn-based negative electrode active material may be utilized in combination with a carbon-based negative electrode active material. If utilizing a mixture of Si-based negative electrode active material or Sn-based negative electrode active material and carbon-based negative electrode active material, a mixing ratio may be about 1:99 to about 90:10 by weight.

**Negative Electrode**

A negative electrode for a rechargeable lithium battery includes a current collector and a negative electrode active material layer on the current collector. The negative electrode active material layer includes a negative electrode active material and may further include a binder and/or a conductive material.

A content of the negative electrode active material may be about 95 wt% to about 99.5 wt% based on 100 wt% of the negative electrode active material layer. A content of the binder may be about 0.5 wt% to about 5 wt% based on 100 wt% of the negative electrode active material layer. A content of the binder may be about 0.5 wt% to about 5 wt% based on 100 wt% of the negative electrode active material layer. For example, the negative electrode active material layer may include about 90 wt% to about 99 wt% of the negative electrode active material, about 0.5 wt% to about 5 wt% of the binder, and about 0.5 wt% to about 5 wt% of the conductive material.

The binder may serve to attach the negative electrode active material particles well to each other and, also, to attach the negative electrode active material well to the current collector. The binder may include a non-aqueous binder, an aqueous binder, a dry binder, and/or a (e.g., any suitable) combination thereof.

The non-aqueous binder may include polyvinyl chloride, carboxylated polyvinyl chloride, polyvinyl fluoride, an ethylene propylene copolymer, polystyrene, polyurethane, polytetrafluoroethylene, polyvinylidene fluoride, polyethylene, polypropylene, polyamideimide, polyimide, and/or a (e.g., any suitable) combination thereof.

The aqueous binder may be selected from among a styrene-butadiene rubber, a (meth)acrylated styrene-butadiene rubber, a (meth)acrylonitrile-butadiene rubber, (meth)acrylic rubber, a butyl rubber, a fluoro rubber, polyethylene oxide, polyvinylpyrrolidone, polyepichlorohydrine, polyphosphazene, poly(meth)acrylonitrile, an ethylene propylene diene copolymer, polyvinylpyridine, chlorosulfonated polyethylene, latex, a polyester resin, a (meth)acrylic resin, a phenol resin, an epoxy resin, polyvinyl alcohol, and/or a (e.g., any suitable) combination thereof.

If an aqueous binder is utilized as the negative electrode binder, it may further include a cellulose-based compound capable of imparting viscosity. The cellulose-based compound includes one or more of carboxylmethyl cellulose, hydroxypropylmethyl cellulose, methyl cellulose, or alkali metal salts thereof. The alkali metal may be Na, K, and/or Li.

The dry binder may be a polymer material capable of being fiberized, and may be, for example, polytetrafluoroethylene, polyvinylidene fluoride, polyvinylidene fluoride-hexafluoropropylene copolymer, polyethylene oxide, and/or a (e.g., any suitable) combination thereof.

The conductive material is included to provide electrode conductivity, and any electrically conductive material may be utilized as a conductive material unless it causes a chemical change. Examples of the conductive material may be a carbon-based material such as natural graphite, artificial graphite, carbon black, acetylene black, ketjen black, a carbon fiber, a carbon nanofiber, a carbon nanotube, and/or the like; a metal-based material such as copper, nickel, aluminum silver, and/or the like in a form of (or provide) a metal powder or a metal fiber; a conductive polymer such as a polyphenylene derivative; or a mixture thereof.

The negative electrode current collector may include one selected from among a copper foil, a nickel foil, a stainless steel foil, a titanium foil, a nickel foam, a copper foam, a polymer substrate coated with a conductive metal, and/or a (e.g., any suitable) combination thereof, but the present disclosure is not limited thereto.

**Separator**

Depending on the type or kind of the rechargeable lithium battery, a separator may be present between the positive electrode and the negative electrode. The separator may include polyethylene, polypropylene, polyvinylidene fluoride, or a multilayer film of two or more layers thereof, and a mixed multilayer film such as a polyethylene/polypropylene two-layer separator, polyethylene/polypropylene/polyethylene three-layer separator, polypropylene/polyethylene/polypropylene three-layer separator, and/or the like.

The separator may include a porous substrate and a coating layer including an organic material, an inorganic material, and/or a (e.g., any suitable) combination thereof on one or both (e.g., simultaneously) surfaces (e.g., opposite surfaces) of the porous substrate.

The porous substrate may be a polymer film formed of any one selected polymer polyolefin such as polyethylene and polypropylene, polyester such as polyethylene terephthalate and polybutylene terephthalate, polyacetal, polyamide, polyimide, polycarbonate, polyether ketone, polyarylether ketone, polyether ketone, polyetherimide, polyamideimide, polybenzimidazole, polyethersulfone, polyphenylene oxide, a cyclic olefin copolymer, polyphenylene sulfide, polyethylene naphthalate, a glass fiber, TEFLON, and polytetrafluoroethylene, or a copolymer or mixture of two or more thereof.

The porous substrate may have a thickness of about 1 μm to about 40 μm, for example, about 1 μm to about 30 μm, about 1 μm to about 20 μm, about 5 μm to about 15 μm, or about 10 μm to about 15 μm.

The organic material may include a (meth)acryl-based copolymer including a first structural unit derived from (meth)acrylamide, and a second structural unit including at least one of a structural unit derived from (meth)acrylic acid or (meth)acrylate, and a structural unit derived from (meth)acrylamidosulfonic acid or a salt thereof.

The inorganic material may include inorganic particles selected from among $Al_2O_3$, $SiO_2$, $TiO_2$, $SnO_2$, $CeO_2$, MgO, NiO, CaO, GaO, ZnO, $ZrO_2$, $Y_2O_3$, $SrTiO_3$, $BaTiO_3$, $Mg(OH)_2$, boehmite, and/or a (e.g., any suitable) combination thereof, but the present disclosure is not limited thereto. An average particle diameter ($D_{50}$) of the inorganic particles may be about 1 nm to about 2000 nm, for example, about 100 nm to about 1000 nm, or about 100 nm to about 700 nm.

The organic material and the inorganic material may be mixed in one coating layer, or a coating layer including an organic material and a coating layer including an inorganic material may be stacked.

The thickness of the coating layer may be about 0.5 μm to about 20 μm, for example, about 1 μm to about 10 μm, or about 1 μm to about 5 μm.

**Rechargeable Lithium Battery**

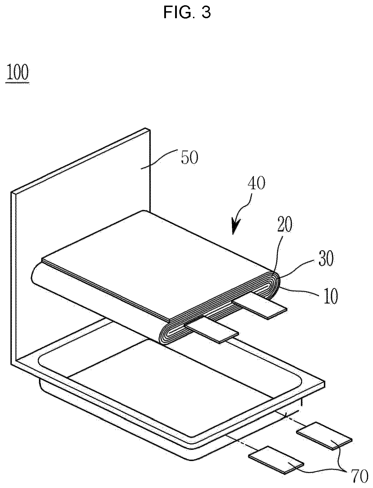

The rechargeable lithium battery may be classified into cylindrical, prismatic, pouch, or coin-type or kind batteries, and/or the like depending on their shape. FIGs. 1 to 3 are schematic views showing rechargeable lithium batteries according to some embodiments. Referring to FIGs. 1 to 3, the rechargeable lithium battery 100 includes an electrode assembly 40 with a separator 30 between the positive electrode 10 and the negative electrode 20, and a case 50 in which the electrode assembly 40 is housed. The positive electrode 10, negative electrode 20, and separator 30 may be impregnated with an electrolyte. The rechargeable lithium battery 100 may include a sealing member 60 that seals the case 50 as shown in FIG. 1, and as shown in FIG. 3, it may further include electrode tabs 70 that serve as an electrical path for guiding the current generated in the electrode assembly 40 to the outside.

Numerical ranges disclosed herein include and are intended to disclose all subsumed sub-ranges of the same numerical precision. For example, a range of "1.0 to 10.0" includes all subranges having a minimum value equal to or greater than 1.0 and a maximum value equal to or less than 10.0, such as, for example, 2.4 to 7.6. Applicant therefore reserves the right to amend this specification, including the claims, to expressly recite any sub-range subsumed within the ranges expressly recited herein.

Here, the listing of the process in a particular order should not necessarily means that the invention or claims require that particular order. That is, the general rule that unless the steps, tasks, or acts of a process (e.g., a method) actually recite an order, the steps, tasks, or acts should not be construed to require one.

Hereinafter, examples and comparative examples of the present disclosure will be described. The following example is only an example of the present disclosure, and the present disclosure is not limited to the following examples.

**EXAMPLES**

**Preparation of Electrolyte**

**Example 1**

An electrolyte was prepared by mixing ethylene carbonate (EC), ethylmethyl carbonate (EMC), and dimethyl carbonate (DMC) in a volume ratio of 2:4:4 to prepare a mixed non-aqueous organic solvent, dissolving 1.5 M $LiPF_6$ therein, and adding 0.05 wt% of an additive represented by Chemical Formula 1-1.

Chemical Formula 1-1

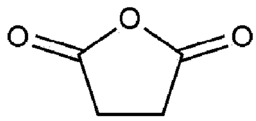

However, in the composition of the electrolyte, a content "wt%" of the additive is based on a total amount, 100 wt% of the electrolyte (a lithium salt + a non-aqueous organic solvent + an additive).

**Example 2**

An electrolyte was prepared in substantially the same manner as in Example 1 except that the additive represented by Chemical Formula 1-1 was added in an amount of 0.1 wt%.

**Example 3**

An electrolyte was prepared in substantially the same manner as in Example 1 except that the additive represented by Chemical Formula 1-1 was added in an amount of 0.5 wt%.

**Example 4**

An electrolyte was prepared in substantially the same manner as in Example 1 except that the additive represented by Chemical Formula 1-1 was added in an amount of 1.0 wt%.

**Example 5**

An electrolyte was prepared in substantially the same manner as in Example 1 except that the additive represented by Chemical Formula 1-1 was added in an amount of 3.0 wt%.

**Example 6**

An electrolyte was prepared in substantially the same manner as in Example 1 except that 0.5 wt% of an additive represented by Chemical Formula 1-2 (Synthesis Example 2) was added instead of the additive represented by Chemical Formula 1-1 (Synthesis Example 1).

Chemical Formula 1-2

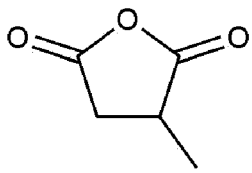

**Example 7**

An electrolyte was prepared in substantially the same manner as in Example 1 except that 0.5 wt% of an additive represented by Chemical Formula 1-3 was added instead of the additive represented by Chemical Formula 1-1.

Chemical Formula 1-3

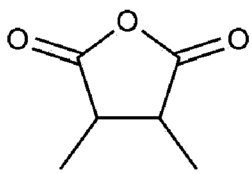

**Example 8**

An electrolyte was prepared in substantially the same manner as in Example 1 except that 0.5 wt% of an additive represented by Chemical Formula 1-4 was added instead of the additive represented by Chemical Formula 1-1 (Synthesis Example 1).

Chemical Formula 1-4

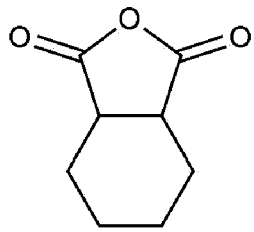

**Example 9**

An electrolyte was prepared in substantially the same manner as in Example 1 except that 0.5 wt% of an additive represented by Chemical Formula 1-5 was added instead of the additive represented by Chemical Formula 1-1 (Synthesis Example 1).

Chemical Formula 1-5

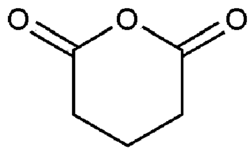

**Comparative Example 1 (Ref.)**

An electrolyte was prepared in substantially the same manner as in Example 1 except that no additive was added (e.g., at all).

**Comparative Example 2**

An electrolyte was prepared in substantially the same manner as in Example 1 except that 0.5 wt% of an additive represented by Chemical Formula A was added instead of the additive represented by Chemical Formula 1-1.

Chemical Formula A

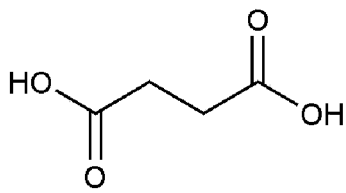

**Manufacture of Rechargeable Lithium Battery Cells**

$LiNi_{0.75}Mn_{0.23}Al_{0.02}O_2$ as a positive electrode active material, polyvinylidene fluoride as a binder, and acetylene black as a conductive material were mixed respectively in a weight ratio of 96:3:1, and then, dispersed in N-methyl pyrrolidone to prepare positive electrode active material slurry.

The positive electrode active material slurry was coated on a 15 micrometer (μm)-thick Al foil, dried at 100 °C, and pressed to manufacture a positive electrode.

A mixture of artificial graphite and a Si-C composite in a weight ratio of 93:7 was prepared as a negative

electrode active material, and the negative electrode active material, a styrene-butadiene rubber binder, and carboxylmethyl cellulose in a weight ratio of 98:1:1 were dispersed in distilled water to prepare a negative electrode active material slurry.

The Si-C composite included a core including artificial graphite and silicon particles and carbonyl pitch coated on the surface of the core.

The negative electrode active material slurry was coated on a 10 μm-thick Cu foil, dried at 100 °C, and pressed to manufacture a negative electrode.

An electrode assembly was manufactured by assembling the positive electrode, the negative electrode, and a separator made of polyethylene with a thickness of 10 μm, and the electrolytes according to Examples 1 to 9 and Comparative Examples 1 and 2 were injected, respectively, to manufacture rechargeable lithium battery cells.

**Evaluation Examples**

The rechargeable lithium battery cells manufactured by respectively utilizing the electrolytes according to Examples 1 to 9 and Comparative Examples 1 and 2 were evaluated as follows, and the results are shown in Tables 1 to 3.

**Evaluation 1: Evaluation of Room-temperature Charging and Discharging Cycle Characteristics**

The rechargeable lithium battery cells according to Examples 1 to 9 and Comparative Examples 1 and 2 were charged and discharged under the following conditions to evaluate cycle characteristics, and the results are shown in Table 1.

The cells were 800 cycles charged and discharged under 0.33 C charge (CC/CV, 4.45 V, 0.025 C Cut-off) /1.0 C discharge (CC, 2.5 V Cut-off) conditions at 25 °C to measure capacity retention and a change in direct current internal resistance (DC-IR).

The capacity retention was calculated according to Equation 1, and the DC internal resistance change rate was calculated according to Equation 2 based on a voltage changed while discharged by applying a current of SOC 50 C (a current equal to 50% of charge capacity based on 100% of the entire charge capacity of the battery cell), for 30 seconds.

Capacity retention rate = (discharge capacity after 800 cycles / discharge capacity after 1 cycle) * 100 equation 1

DC internal resistance change rate = {(DC-IR after 800 cycles - DC-IR after 1 cycle) / (DC-IR after 1 cycle)} * 100 equation 2

Table 1

| | Capacity retention rate@25 °C, 800th cycle (%) | Initial resistance @25 °C (mΩ) | DC-IR after 800th cycle @25 °C (mΩ) | DC-IR change rate after 800th cycle @25 °C (%) |
|---|---|---|---|---|
| Example 1 | 74.4 | 23.27 | 29.76 | 127.9 |
| Example 2 | 80.0 | 23.88 | 28.63 | 119.9 |
| Example 3 | 82.4 | 24.71 | 29.13 | 117.9 |
| Example 4 | 82.0 | 25.41 | 30.34 | 119.4 |
| Example 5 | 78.9 | 25.65 | 32.19 | 125.5 |
| Example 6 | 71.7 | 23.99 | 31.04 | 129.4 |
| Example 7 | 65.5 | 23.63 | 31.36 | 132.7 |
| Example 8 | 77.1 | 25.64 | 34.64 | 135.1 |
| Example 9 | 60.8 | 24.88 | 34.88 | 140.2 |
| Comparative Example 1 | 55.4 | 20.97 | 30.76 | 146.7 |

(continued)

| | Capacity retention rate@25 °C, 800th cycle (%) | Initial resistance @25 °C (mΩ) | DC-IR after 800th cycle @25 °C (mΩ) | DC-IR change rate after 800th cycle @25 °C (%) |
|---|---|---|---|---|
| Comparative Example 2 | 61.0 | 22.90 | 31.83 | 139.0 |

Referring to Table 1, if the additive according to some embodiments was utilized at room temperature, not only was the cycle-life characteristics improved, but an increase in resistance was suppressed or reduced.

**Evaluation 2: Evaluation of High-temperature Storage Characteristics (Capacity Retention Rate/Capacity Recovery Rate/DC-IR Change Rate)**

**(1) Capacity Retention Rate and Capacity Recovery Rate**

Each of the rechargeable lithium battery cells according to Examples 1 to 9 and Comparative Examples 1 and 2 was once charged and discharged at 0.33 C to measure charge and discharge capacity (before the high-temperature storage).

In one or more embodiments, each of the rechargeable lithium battery cells of Examples 1 to 9 and Comparative Examples 1 and 2 was charged to SOC 100% (a state of being charged to 100% of charge capacity based on 100% of the entire charge capacity of the battery cell), stored at 60 °C for 60 days, and then, discharged to 3.0 V under a constant current condition at 0.33 C to measure initial discharge capacity.

The cells were recharged to 4.3 V at a constant current of 0.33 C and cut off at an ending current of 0.02 C and discharged to 3.0 V at the constant current of 0.33C to twice measure discharge capacity. A ratio of first discharge capacity to the initial discharge capacity was calculated as capacity retention (retention capacity), and second discharge capacity was provided as recovery capacity.

**(2) DC-IR Change Rate**

Initial DC resistance (DCIR) of each of the rechargeable lithium battery cells according to Examples 1 to 9 and Comparative Examples 1 and 2 were measured with $\triangle V/\triangle I$ (voltage change/current change), and DC resistances were measured after charging the cells into a full-charge state (SOC 100%) as an internal maximum energy state and storing them at a high temperature of 60 °C for 60 days to calculate DCIR increase rates (%), and the results are shown in Table 3.

Equation 3

$$\text{DCIR increase rate} = (\text{DCIR after 60 days} / \text{initial DCIR}) * 100$$

Table 2

| | Capacity retention rate @60 °C, 60D (%) | Capacity recovery rate @60 °C, 60D(%) | Initial resistance@25 °C (mΩ) | DC-IR @60 °C, 60D (mΩ) | DC-IR change rate (%) |
|---|---|---|---|---|---|
| Example 1 | 84.1 | 88.9 | 23.21 | 29.17 | 125.7 |
| Example 2 | 89.4 | 93.5 | 23.90 | 29.47 | 123.3 |
| Example 3 | 91.2 | 95.0 | 24.71 | 29.73 | 120.3 |
| Example 4 | 90.0 | 94.4 | 25.01 | 31.14 | 124.5 |
| Example 5 | 85.8 | 89.2 | 25.66 | 32.69 | 127.4 |
| Example 6 | 83.4 | 88.5 | 23.94 | 31.60 | 132.0 |
| Example 7 | 79.6 | 82.1 | 23.61 | 31.51 | 137.7 |
| Example 8 | 75.1 | 80.0 | 25.67 | 35.58 | 138.6 |

(continued)

| | Capacity retention rate @60 °C, 60D (%) | Capacity recovery rate @60 °C, 60D(%) | Initial resistance@25 °C (mΩ) | DC-IR @60 °C, 60D (mΩ) | DC-IR change rate (%) |
|---|---|---|---|---|---|
| Example 9 | 78.8 | 80.0 | 24.86 | 35.35 | 142.2 |
| Comparative Example 1 | 61.0 | 73.7 | 21.00 | 31.94 | 152.1 |
| Comparative Example 2 | 65.9 | 74.0 | 22.90 | 33.16 | 144.8 |

Referring to Table 2, the rechargeable lithium battery cells of Examples 1 to 9, compared with the cells of Comparative Examples 1 and 2, each exhibited improved capacity retention and an improved capacity recovery rate during the high-temperature storage but were suppressed or reduced from an increase in resistance.

**Summary**

Referring to Tables 1 and 2, Examples 1 to 9 utilizing an aliphatic cyclic acid anhydride-based compound (Chemical Formula 1) as an electrolyte additive as well as a cobalt-free positive electrode active material, compared with Comparative Example 1 utilizing no additive, showed improved storage characteristics at a high temperature as well as improved room temperature charging and discharging characteristics of the rechargeable lithium battery cells.

In contrast, in Comparative Example 2 utilizing a linear acid anhydride-based compound as an electrolyte additive as well as a cobalt-free positive electrode active material, the additive was reduced and decomposed on the surface of the negative electrode and thus formed an unstable film, which deteriorated a cycle-life of the rechargeable lithium battery cell, while increasing resistance. This phenomenon became more significant (e.g., noticeable), if stored at a high temperature.

**Reference Numerals**

100: rechargeable lithium battery
10: positive electrode
20: negative electrode
30: separator
40: electrode assembly
50: case
60: sealing member
70: electrode tab

**Claims**

**1.** A rechargeable lithium battery (100) comprising:

a positive electrode (10) comprising a cobalt-free positive electrode active material having a layered structure;
a negative electrode (20); and
an electrolyte comprising an additive represented by Chemical Formula 1:

Chemical Formula 1

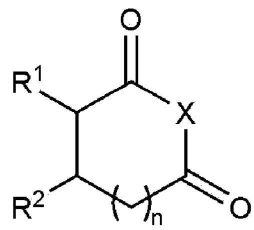

in Chemical Formula 1,

X is O or S;
$R^1$ and $R^2$ are each independently a hydrogen atom, a substituted or unsubstituted C1 to C10 alkyl group, or are linked to each other to form a C3 to C10 aliphatic ring; and
n is an integer from 0 to 3,
wherein "substituted" refers to replacement of at least one hydrogen of a compound by a substituent selected from among a halogen atom, a hydroxy group, a C1 to C20 alkoxy group, a nitro group, a cyano group, amine group, an imino group, an azido group, an amidino group, a hydrazino group, a hydrazono group, a carbonyl group, a carbamyl group, a thiol group, an ester group, an ether group, a carboxyl group or a salt thereof, a sulfonic acid group or a salt thereof, a phosphoric acid or a salt thereof, a C1 to C20 alkyl group, a C2 to C20 alkenyl group, a C2 to C20 alkynyl group, a C6 to C20 aryl group, a C3 to C20 cycloalkyl group, a C3 to C20 cycloalkenyl group, a C3 to C20 cycloalkynyl group, a C2 to C20 heterocycloalkyl group, a C2 to C20 heterocycloalkenyl group, a C2 to C20 heterocycloalkynyl group, and a C3 to C20 heteroaryl group.

2. The rechargeable lithium battery (100) as claimed in claim 1, wherein the cobalt-free positive electrode active material comprises at least one lithium composite oxide represented by Chemical Formula 2:

Chemical Formula 2 $$Li_aNi_xMn_yM^1{}_zM^2{}_wO_{2\pm b}X_c$$

in Chemical Formula 2,

$0.5 \leq a < 1.8$, $0 \leq b \leq 0.1$, $0 \leq c \leq 0.1$, $0 \leq w < 0.1$, $0.6 \leq x < 1.0$, $0 < y < 0.4$, $0 < z < 0.1$, $w + x + y + z= 1$,
$M^1$ and $M^2$ are each independently one or more element selected from among Al, Mg, Ti, Zr, Cr, Sr, V, B, W, Mo, Nb, Si, Ba, Ca, Ce, Cr, Fe and Nb, and
X is one or more element selected from among S, F, P, and Cl.

3. The rechargeable lithium battery (100) as claimed in claim 2, wherein the lithium composite oxide is represented by Chemical Formula 2-1:

Chemical Formula 2-1 $$Li_aNi_{x1}Mn_{y1}Al_{z1}M^2{}_{w1}O_{2\pm b}X_c$$

in Chemical Formula 2-1,

$0.5 \leq a < 1.8$, $0 \leq b \leq 0.1$, $0 \leq c \leq 0.1$, $0 \leq w1 < 0.1$, $0.6 \leq x1 < 1.0$, $0 < y1 < 0.4$, $0 < z1 < 0.1$, $w1 + x1 + y1 + z1 = 1$,
$M^2$ is one or more element selected from among Mg, Ti, Zr, Cr, Sr, V, B, W, Mo, Nb, Si, Ba, Ca, Ce, Cr, Fe and Nb, and
X is one or more element selected from among S, F, P, and Cl.

4. The rechargeable lithium battery (100) as claimed in any one of the preceding claims, wherein in Chemical Formula 1 X is O.

5. The rechargeable lithium battery (100) as claimed in any one of the preceding claims, wherein in Chemical Formula 1 $R^1$ and $R^2$ are each independently a hydrogen atom or a methyl group, or are linked to each other to form a cyclohexane ring.

6. The rechargeable lithium battery (100) as claimed in any one of the preceding claims, wherein in Chemical Formula 1 n is 0 or 1.

**7.** The rechargeable lithium battery (100) as claimed in claim 1, wherein the additive is represented by one selected from among Chemical Formulas 1-1 to 1-5:

Chemical Formula 1-1

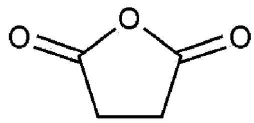

Chemical Formula 1-2

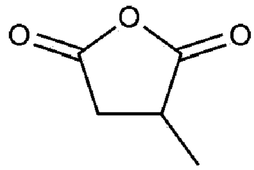

Chemical Formula 1-3

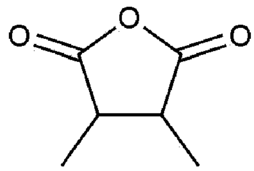

Chemical Formula 1-4

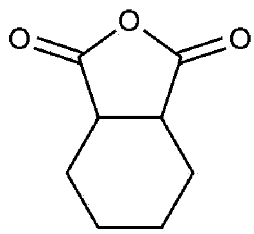

Chemical Formula 1-5

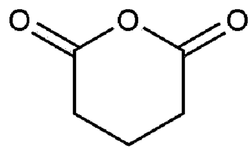

.

**8.** The rechargeable lithium battery (100) as claimed in any one of the preceding claims, wherein the electrolyte comprises the additive in an amount of 0.05 to 3 wt%, based on 100 wt% of the electrolyte.

**9.** The rechargeable lithium battery (100) as claimed in any one of the preceding claims, wherein the electrolyte further comprises a non-aqueous organic solvent and a lithium salt.

**10.** The rechargeable lithium battery (100) as claimed in any one of the preceding claims, wherein the rechargeable lithium battery (100) further comprises a separator (30) between the positive electrode (10) and the negative electrode (20).

**11.** The rechargeable lithium battery (100) as claimed in claim 9, wherein the non-aqueous organic solvent comprises

ethylene carbonate (EC), ethylmethyl carbonate (EMC), and dimethyl carbonate (DMC).

**12.** The rechargeable lithium battery (100) as claimed in claim 11, wherein a volume ratio of ethylene carbonate (EC), ethylmethyl carbonate (EMC), and dimethyl carbonate (DMC) is 2:4:4.

**13.** An electrolyte for a rechargeable lithium battery (100), the electrolyte comprising:

a non-aqueous organic solvent;
a lithium salt; and
an additive represented by Chemical Formula 1:

Chemical Formula 1

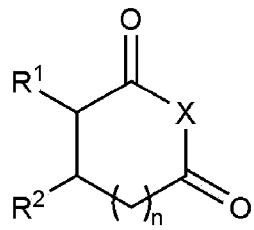

in Chemical Formula 1,

X is O or S;
$R^1$ and $R^2$ are each independently a hydrogen atom, a substituted or unsubstituted C1 to C10 alkyl group, or are linked to each other to form a C3 to C10 aliphatic ring; and
n is an integer from 0 to 3,
wherein "substituted" refers to replacement of at least one hydrogen of a compound by a substituent selected from among a halogen atom, a hydroxy group, a C1 to C20 alkoxy group, a nitro group, a cyano group, amine group, an imino group, an azido group, an amidino group, a hydrazino group, a hydrazono group, a carbonyl group, a carbamyl group, a thiol group, an ester group, an ether group, a carboxyl group or a salt thereof, a sulfonic acid group or a salt thereof, a phosphoric acid or a salt thereof, a C1 to C20 alkyl group, a C2 to C20 alkenyl group, a C2 to C20 alkynyl group, a C6 to C20 aryl group, a C3 to C20 cycloalkyl group, a C3 to C20 cycloalkenyl group, a C3 to C20 cycloalkynyl group, a C2 to C20 heterocycloalkyl group, a C2 to C20 heterocycloalkenyl group, a C2 to C20 heterocycloalkynyl group, and a C3 to C20 heteroaryl group.

**14.** A method of manufacturing a rechargeable lithium battery (100), the method comprising:

preparing an electrolyte as defined in claim 12;
preparing a positive electrode (10);
preparing a negative electrode (20);
preparing an electrode assembly comprising the positive electrode (10), the negative electrode (20), and a separator (30); and
injecting the electrolyte into the electrode assembly.

FIG. 1

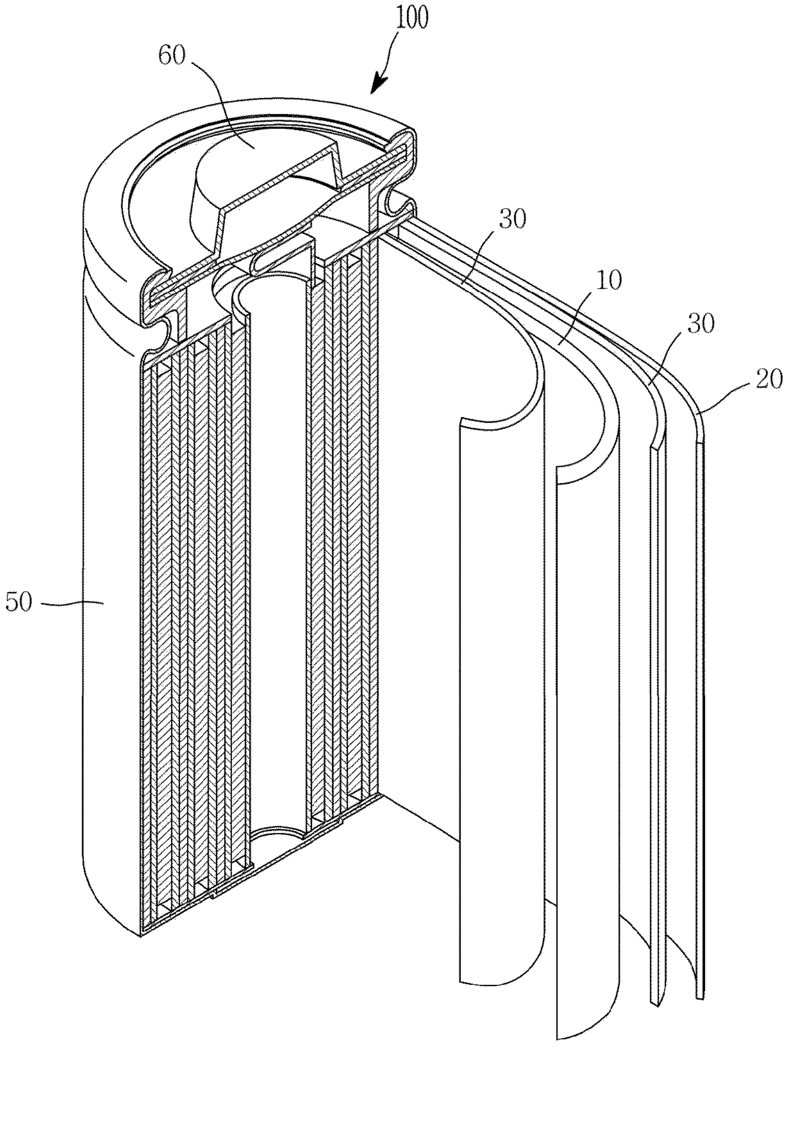

FIG. 2

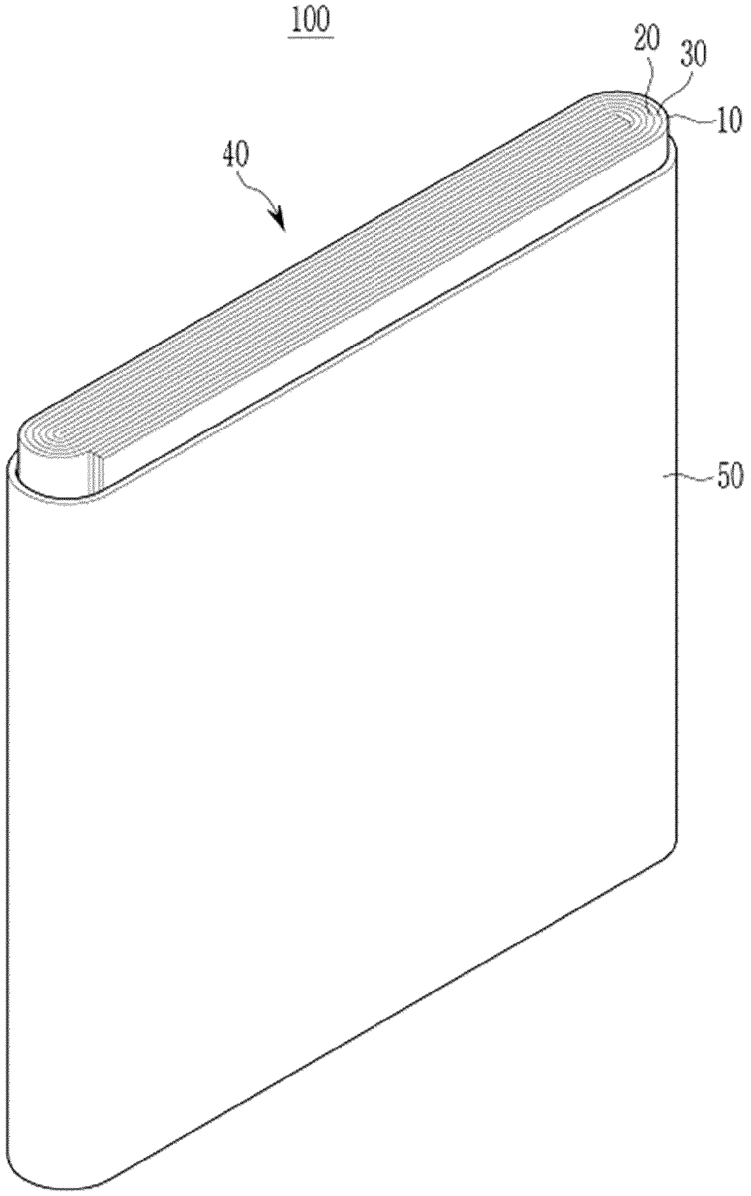

FIG. 3